# EUROPEAN PATENT APPLICATION

(11) **EP 4 475 566 A1**
(43) Date of publication of application: **11.12.2024**
(21) Application number: 24180936.7
(22) Date of filing: 07.06.2024
(51) Int. Cl.: H04R 25/00, H04W 4/06, H04W 4/80

(54) **CONVERSATION BRIDGE FOR EAR-WEARABLE DEVICES**

(30) Priority: 09.06.2023 US 202363507241 P; 15.05.2024 US 202418664918
(71) Applicant: Starkey Laboratories, Inc., Eden Prairie, MN 55344 (US)
(72) Inventor: SOLUM, Jeffery Paul, Eden Prairie, 55344 (US); MONSON, Tom, Eden Prairie, 55344 (US); BROWNING, Evan, Eden Prairie, 55344 (US); HAUBRICH, Greg, Eden Prairie, 55344 (US)
(74) Representative: Dentons UK and Middle East LLP

(57) **Abstract**

Disclosed herein, among other things, are systems and methods for providing a conversation bridge for ear-wearable devices. A method includes receiving, at a central device, a first wireless signal from one or more first hearing devices configured to be worn by a first user via a first wireless connection, and a second wireless signal from one or more second hearing devices configured to be worn by a second user via a second wireless connection. The central device transmits to the one or more first hearing devices and the one or more second hearing devices, one or more audio packets based on the received first and second wireless signals.

## Description

### CLAIM OF PRIORITY AND INCORPORATION BY REFERENCE

The present application claims the benefit under 35 U.S.C. §119(e) of U.S. Provisional Patent Application 63/507,241, filed June 9, 2023, the disclosure of which is hereby incorporated by reference herein in its entirety.

### TECHNICAL FIELD

This document relates generally to audio device systems and more particularly to systems and methods for wireless communication between users of ear-wearable devices.

### BACKGROUND

Audio devices can be used to provide audible output to a user based on received wireless signals. Examples of audio devices include speakers and ear-wearable devices, also referred to herein as hearing devices. Example of hearing devices include hearing assistance devices or hearing instruments, including both prescriptive devices and non-prescriptive devices. Specific examples of hearing devices include, but are not limited to, hearing aids, headphones, and earbuds.

Hearing aids are used to assist patients suffering hearing loss by transmitting amplified sounds to ear canals. In one example, a hearing aid is worn in and/or around a patient's ear. Hearing aids may include processors and electronics that improve the listening experience for a specific wearer or in a specific acoustic environment. Hearing and understanding speech in a noisy environment can be challenging, especially for a hearing-impaired person.

Thus, there is a need in the art for improved systems and methods for improving understanding of conversations with others in background noise.

### SUMMARY

Disclosed herein, among other things, are systems and methods for a conversation bridge between ear-wearable devices. A method includes receiving, at a central device, a first wireless signal from one or more first hearing devices configured to be worn by a first user via a first wireless connection, a second wireless signal from one or more second hearing devices configured to be worn by a second user via a second wireless connection, and a third wireless signal from one or more third hearing devices configured to be worn by a third user via a third wireless connection. The central device transmits to the one or more first hearing devices, the one or more second hearing devices, and the one or more third hearing devices, one or more audio packets based on the received first, second and third wireless signals. The central device may be a dedicated standalone device, or any of the hearing devices may act as the central device. Another example includes the hearing devices broadcasting their audio without a central device. Any number of hearing devices or pairs of hearing devices may be used in the present system, and the audio packets may be broadcast or unicast, and may include mixed or multiplexed audio from all devices or a select number of devices, in various examples.

This Summary is an overview of some of the teachings of the present application and not intended to be an exclusive or exhaustive treatment of the present subject matter. Further details about the present subject matter are found in the detailed description and appended claims.

### BRIEF DESCRIPTION OF THE DRAWINGS

Various embodiments are illustrated by way of example in the figures of the accompanying drawings. Such embodiments are demonstrative and not intended to be exhaustive or exclusive embodiments of the present subject matter.
FIG. 1A illustrates a block diagram of a system including a unicast conversation bridge for ear-wearable devices, according to various examples of the present subject matter.
FIG. 1B illustrates a block diagram of a system with a unicast conversation bridge including a microphone for ear-wearable devices, according to various examples of the present subject matter.
FIG. 2A illustrates a block diagram of a system including a broadcast conversation bridge for ear-wearable devices, according to various examples of the present subject matter.
FIG. 2B illustrates a block diagram of a system including a conversation bridge including one or more microphones, according to various examples of the present subject matter.
FIG. 3 illustrates a block diagram of a system including a wireless ear-wearable device that functions as a unicast conversation bridge for ear-wearable devices, according to various examples of the present subject matter.
FIG. 4 illustrates a block diagram of a system including a wireless ear-wearable device that functions as a broadcast conversation bridge for ear-wearable devices, according to various examples of the present subject matter.
FIG. 5 illustrates a block diagram of a system for ear-wearable devices where each device broadcasts its own audio and receives the broadcast of other network members, according to various examples of the present subject matter.
FIG. 6 illustrates a block diagram of a system including a plurality of coordinated sets of wireless ear-wearable devices, and including a broadcast conversation bridge for the ear-wearable devices, according to various examples of the present subject matter.
FIG. 7 illustrates a block diagram of a hearing device circuit, according to various examples of the present subject matter.
FIG. 8 illustrates a flow diagram of a method for providing a conversation bridge for ear-wearable devices, according to various examples of the present subject matter.
FIG. 9 illustrates a block diagram of an example machine upon which any one or more of the techniques discussed herein may perform.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment, including combinations of such embodiments. The following detailed description is demonstrative and not to be taken in a limiting sense. The scope of the present subject matter is defined by the appended claims, along with the full scope of legal equivalents to which such claims are entitled.

The present detailed description will discuss audio devices such as hearing devices and speakers. The description refers to hearing devices generally, which include earbuds, headsets, headphones and hearing assistance devices using the example of hearing aids. Other hearing devices include, but are not limited to, those in this document. It is understood that their use in the description is intended to demonstrate the present subject matter, but not in a limited or exclusive or exhaustive sense.

Hearing aid users, depending on the severity of their hearing loss, may have trouble communicating with others nearby in the face of background noise. Therefore, there is a need for efficient wireless communication between hearing aid wearers as well as others who may want to participate in conversations where noise is prevalent. Modern ear worn devices contain wireless radios capable of two-way and broadcast communication over such protocols as Bluetooth and Bluetooth Low Energy (BLE). Such devices may use protocols allowing for unicast transmission and reception and/or broadcast transmission and reception.

The present subject matter provides wireless network topologies that allow for ear worn devices to communicate with one another for the purpose of improving user experience including improving conversations with one another and/or others in background noise. Disclosed herein are various embodiments allowing such communication between participants. Thus, the present subject matter provides for improved speech understanding and/or conversations between participating users, particularly in environments with background noise.

The present subject matter provides for streaming audio picked up by one or more microphones picked up on peripheral devices, such as ear worn microphones built into earbuds and/or hearing aids, which can be shared with others when conditions warrant, advantageously in high noise environments or when acoustic-only audio can be improved through wireless communication. As used herein, the term peripheral devices is intended to mean any device having one or more microphones and is capable of unicast transmission and reception and/or broadcast transmission and reception, the term being intended, as used herein, to be interchangeable with the term participants or member and may be any ear-wearable device, ear bud, hearing assistance device, hearing device and/or hearing aid. In various examples, each peripheral device or group of devices incorporates one or more microphones to pick up audio, including the respective wearer's voice (where applicable), and sends the corresponding audio over a wireless uplink to a central device which advantageously coordinates the wireless scheduling of packet-based communication to one or more of the peripheral devices, to one or more of the other peripheral devices and/or each of the group of devices. Each peripheral device is preferably equipped with a receiver or speaker to render the audio received in the downlinks, in various examples.

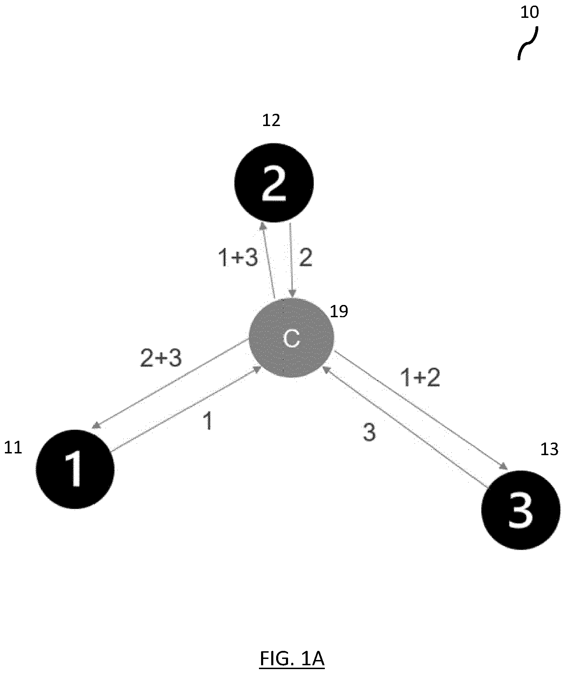

In one example, each of the peripheral devices may send unicast audio to a central intermediary device (also referred to herein as a central device or conversation bridge) or hearing device acting as a central device (such as in a Bluetooth piconet), and the central device can then mix and/or multiplex the audio together from the multiple sources (e.g., including the unicast audio received from one or more of the peripheral devices and/or audio picked up by the central intermediary device) and sends the audio to one or more of the peripheral devices used by the participants either via a broadcast mode or via a unicast mode. To avoid echo in the unicast mode, each of the participant's own voice could be removed (by the central device) from the audio sent to each participant (e.g., peripheral device), for example, as described below and shown in the accompanying figures, for example, as illustrated in FIG. 1A.

FIG. 1A depicts three peripheral devices each sending their audio (as pick up by each peripheral device's one or more microphones) to a central bridge device, also referred to herein simply as the central device, which mixes and/or multiplexes the encoded audio and sends the combined audio to one or more of the peripheral devices and/or each of the peripheral devices using the bidirectional streams set up to each peripheral device. The central device may remove the "own voice" from each downlink (as applicable) to prevent unwanted echo, in an example. The central device acting as conference bridge may be a smartphone (for example, an application running on a smartphone) or other device with wireless communication capability. The central device may further allow other networks to join in the conversation, in some examples. The other networks may be nearby or they may be anywhere network communication is available such as through a WiFi network or a cellular network using a VoIP (voice over internet protocol) service which may have other bridging or aggregation capabilities allowing many smaller networks to join either locally or over many miles, in various examples. In such examples, wireless signals, including audio, obtained from a VoIP and/or phone call can optionally be provided to the central device.

In one example, the audio received from the one or more peripheral devices may be decoded from each uplink channel by the central device, mixed as combination, and then re-encoded and sent out as a wireless packet to one or more of and/or each participant (via their respective peripheral device), as shown in FIG. 1A using a bidirectional unicast bridge mode. This example saves wireless bandwidth but may add some latency, for example, a minimum of one audio frame of latency may be added for decoding and encoding the packet. In another example, the channels remain encoded and are multiplexed in the wireless protocol, where each channel is sent in a separate time-multiplexed packet or in a combined packet in the combinations, for example as shown in FIG. 1A. The process of multiplexing may increase the "over the air" bandwidth but advantageously reduces latency and minimizes the process of decoding, mixing and re-encoding at the central device. In some embodiments, the central device can switch between mixing and/or multiplexing the uplink channels, for example, depending on the number of peripheral devices. Where there are greater number of peripheral devices, it may be advantageous in some circumstances for the central device to mix rather than multiplex the wireless signals from the uplink channels.

In FIG. 1A, an embodiment of the present subject matter is shown with three hearing devices (or participants) with a central device. However, other number of peripheral devices/participants may be used without departing from the scope of the present subject matter. In various examples, two peripheral devices may be used. In other examples, four or more peripheral devices may be used. Likewise, each of the other embodiments depicted or described herein may be used for communication among any number of peripheral devices, particularly advantageously wherein any one or more of the peripheral devices are hearing devices.

FIG. 1A illustrates a block diagram of a system 10 including a unicast conversation bridge for ear-wearable devices, according to various examples of the present subject matter. The system 10 in FIG. 1A includes one or more peripheral devices, such as one or more first hearing devices 11 configured to be worn on or in an ear of a first user, one or more second hearing devices 12 configured to be worn on or in an ear of a second user, and one or more third hearing devices 13 configured to be worn on or in an ear of a third user. The system 10 also includes a central device 19 configured for wireless communication with the one or more peripheral devices, such as the one or more first hearing devices 11, the one or more second hearing devices 12 and the one or more third hearing devices 13. In various examples, the central device 19 includes one or more processors programmed to receive a first wireless signal 1 from the one or more first hearing devices 11 via a first wireless connection, receive a second wireless signal 2 from the one or more second hearing devices 12 via a second wireless connection, receive a third wireless signal 3 from the one or more third hearing devices 13 via a third wireless connection, and transmit, to the one or more first hearing devices 11, the one or more second hearing devices 12, and the one or more third hearing devices 13, one or more audio packets based on the received first wireless signal 1, the received second wireless signal 2 and the received third wireless signal 3. Preferably, the first, second and third wireless signals, of this example, each comprise the audio picked up from the one or more microphones on the respective peripheral device and a control channel.

In one example, the central device 19 is configured to send an audio packet 2+3 in unicast mode to the one or more first hearing devices 11 that includes the audio received from the one or more second hearing devices 12 and the audio received from the one or more third hearing devices 13. The one or more first hearing devices 11 does not receive back the audio transmitted by the one or more first hearing devices 11 to the central device 19, thus avoiding echo or overlap. In a similar manner, the central device 19 is configured to send an audio packet 1+3 to the one or more second hearing devices 12 that includes the audio received from the one or more first hearing devices 11 and the audio received from the one or more third hearing devices 13. Likewise, the central device 19 is configured to send an audio packet 1+2 to the one or more third hearing devices 13 that includes the audio received from the one or more second hearing devices 12 and the audio received from the one or more first hearing devices 11.

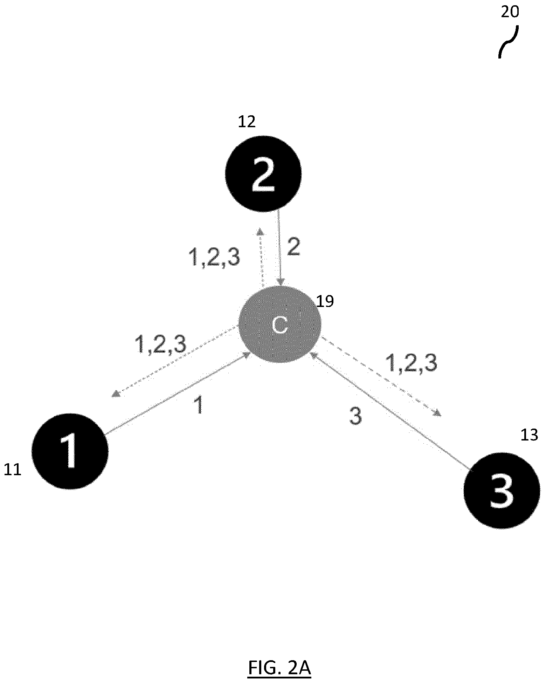

In some examples, one or more of the first wireless connection, the second wireless connection and/or the third wireless connection include a Bluetooth^{®} connection or a Bluetooth^{®} Low Energy (BLE) connection. In the depicted embodiment, transmitting to the one or more first hearing devices, the one or more second hearing devices and the one or more third hearing devices includes sending multiple unicast transmissions. In some examples, the multiple unicast transmissions include audio packets generated by mixing the first wireless signal, the second wireless and the third wireless signal, and then removing the first, second or third wireless signal from the mixed wireless signals in the transmission to the respective one or more first, second or third hearing devices to prevent an echo. As shown with respect to FIG. 2A, transmitting to the one or more first hearing devices, the one or more second hearing devices and the one or more third hearing devices may include the central device sending a broadcast transmission. In some examples, generating by the central device the one or more audio packets for transmission includes multiplexing the first wireless signal, the second wireless signal and the third wireless signal. At least one of the one or more first hearing devices, the one or more second hearing devices, or the one or more third hearing devices may be a hearing assistance device such as a hearing aid, in some examples.

In another example one or more wired, wireless, or built-in microphones may be included in any of the various examples herein, whereby, for example a non-hearing impaired person may wear such one or more microphones, and/or or a microphone in combination with the central device 19. In some examples, ambient noise may be cancelled out by eliminating highly correlated sound from all or some of the microphones while enhancing uncorrelated sound such as a wearer's voice from the audio obtained by each microphone. Additional noise cancelling techniques may be used given the number of microphones employed in these topologies, in various examples. While three peripheral devices are shown, the present subject matter can be expanded to any number of devices limited only by bandwidth and power resources of the network, in various examples. The wireless signal strength may be adjusted depending on the use of the central device/peripheral devices, e.g., whether by unicast or broadcast transmission. For example, the signal strength used should be sufficient for conversations between participants, in various examples.

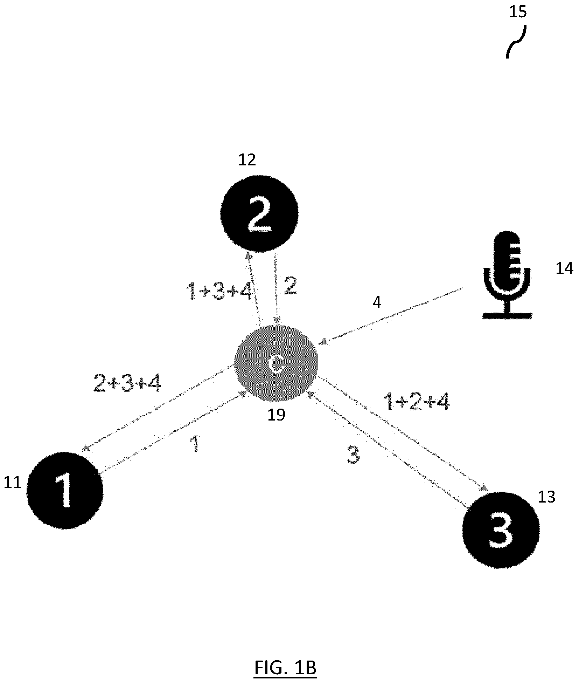

FIG. 1B illustrates a block diagram of a system 15 with a unicast conversation bridge for ear-wearable devices, wherein the system includes an additional (external) microphone, according to various examples of the present subject matter. In this example, the central device 19 includes a wired or wireless microphone 14. Although in this example the central device 19 includes a single wired or wireless microphone 14, it will be understood that the central device 19 may include multiple wired and/or wireless microphones and/or the central device 19 may be configured to receive audio from any number of external wired or wireless microphones. In various examples, the central device 19 is configured to receive an audio signal 4 from the microphone 14, receive a first wireless signal 1 from the one or more first hearing devices 11 via a first wireless connection, receive a second wireless signal 2 from the one or more second hearing devices 12 via a second wireless connection, receive a third wireless signal 3 from the one or more third hearing devices 13 via a third wireless connection, and transmit, to the one or more peripheral devices, including any or all of the one or more first hearing devices 11, the one or more second hearing devices 12, and the one or more third hearing devices 13, one or more audio packets based on the received first wireless signal 1, the received second wireless signal 2 and/or the received third wireless signal 3.

In one example, the central device 19 is configured to send an audio packet 2+3+4 in unicast mode to the one or more first hearing devices 11 that includes the audio from the microphone 14 the audio received from the one or more second hearing devices 12 and the audio received from the one or more third hearing devices 13. Thus, the one or more first hearing devices 11 does not receive back the audio transmitted by the one or more first hearing devices 11 to the central device 19, thus avoiding echo or overlap. In a similar manner, the central device 19 is configured to send an audio packet 1+3+4 to the one or more second hearing devices 12 that includes the audio received from the microphone 14, the audio received from the one or more first hearing devices 11 and the audio received from the one or more third hearing devices 13. Likewise, the central device 19 is configured to send an audio packet 1+2+4 to the one or more third hearing devices 13 that includes the audio received from the microphone 14, the audio received from the one or more second hearing devices 12 and the audio received from the one or more first hearing devices 11. It will be appreciated that although Figure 1B depicts that each of the peripheral devices receives an audio packet from the central device, the present subject matter includes a system where only one or more of the peripheral devices is configured to receive such audio packets. For example, one or more of the peripheral devices may be configured to transmit their audio to the central device but each of the peripheral devices may not be configured to receive audio packets from the central device.

According to various examples, the central device 19 may operate in a unicast-broadcast mode in which the central device can receive the audio channels from each peripheral device over a unicast uplink and set up multiple broadcast isochronous streams (BISes) within one broadcast isochronous group (BIG), from which one or more of or each peripheral device can pick up the other audio streams as shown in FIG. 2A. Although Fig. 2A illustrates that each peripheral device operates in a unicast-broadcast mode, one or more of the peripheral devices could operate in a unicast-unicast mode, unicast-broadcast mode and/or a broadcast-broadcast mode. FIG. 2A depicts a combination unicast uplink and broadcast bridge mode in which the central device 19 receives unicast audio streams from one or more of peripheral devices 11, 12 and 13. The central device 19 then broadcasts a single BIG with three BISes. Each peripheral device is configured to receive the 2 BISes while excluding reception of their own audio channel preventing echo effects, as shown in FIG. 2A. In various examples, the central device controls the timing for all of the piconets and the broadcast thus eliminating packet collisions.

FIG. 2A illustrates a block diagram of a system 20 including a broadcast conversation bridge for ear-wearable devices, according to various examples of the present subject matter. The system 20 includes one or more peripheral devices, including for example, one or more first hearing devices 11 configured to be worn on or in an ear of a first user, one or more second hearing devices 12 configured to be worn on or in an ear of a second user, and one or more third hearing devices 13 configured to be worn on or in an ear of a third user. The system 20 also includes a central device 19 configured for wireless communication with the one or more first hearing devices 11, the one or more second hearing devices 12 and the one or more third hearing devices 13. In various examples, the central device 19 includes one or more processors programmed to receive a first wireless signal 1 from the one or more first hearing devices 11 via a first wireless connection, receive a second wireless signal 2 from the one or more second hearing devices 12 via a second wireless connection, receive a third wireless signal 3 from the one or more third hearing devices 13 via a third wireless connection, and transmit, to the one or more first hearing devices 11, the one or more second hearing devices 12, and the one or more third hearing devices 13, one or more audio packets based on the received first wireless signal 1, the received second wireless signal 2 and the received third wireless signal 3.

In one example, the central device 19 is configured to send an audio packet 1+2+3 in broadcast mode to one or more of or all of the peripheral devices (herein exemplified as the one or more first hearing devices 11, the one or more second hearing devices 12, and the one or more third hearing devices 13). The audio packet 1+2+3 includes the audio received from the one or more first hearing devices 11, the audio received from the one or more second hearing devices 12 and the audio received from the one or more third hearing devices 13, in one example. In various examples, all audio picked up by the one or more microphones of the devices may be unicast to the central device 19, including but not limited to own voice signals from the users of the devices. The central device 19 may control which microphones are open on some devices, and may use auto mixing to cancel correlated (ambient noise) signals based on signal levels in input, pass through the un-correlated (most likely speech).

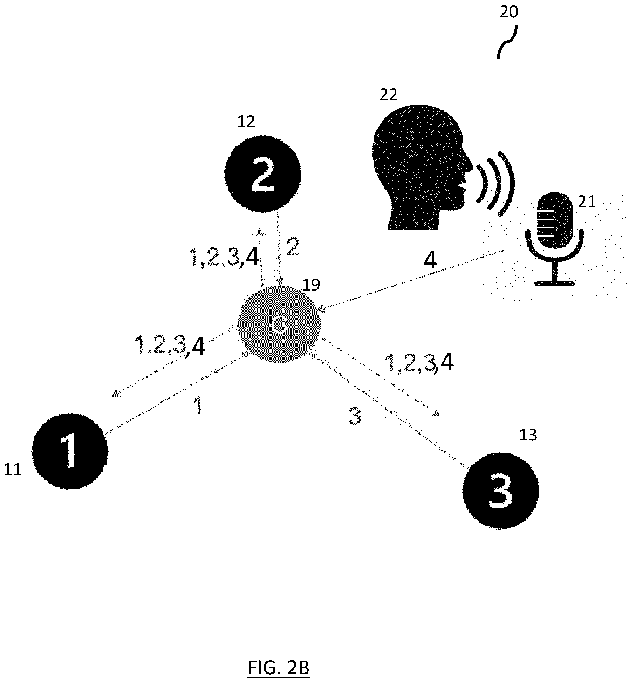

FIG. 2B illustrates a block diagram of the system of Figure 2A including a conversation bridge, the system further comprising one or more microphones, according to various examples of the present subject matter. In these examples, the central device 19 includes one or more microphones 21 configured to receive acoustic input, such as speech from a talking person 22, and the central device 19 converts the speech into digital signals or packets to send to one or more of the peripheral devices, such as hearing devices, 11, 12, 13. In various examples, the central device 19 may include a directional microphone array, such as a table microphone. A directional microphone assembly, such as a table microphone, may include a 360-degree microphone array and can produce signal to noise ratios for users of the hearing devices 11, 12, 13 that may be superior to those produced by a hearing device alone. Advantageously, such a directional microphone assembly may be better adept at listening to different talkers at different directions relative to the hearing device users.

In Figure 2B, the central device 19 is configured to send an audio packet 1+2+3+4 in broadcast mode to one or more of or all of the peripheral devices (herein exemplified as the one or more first hearing devices 11, the one or more second hearing devices 12, and the one or more third hearing devices 13). The audio packet 1+2+3+4 includes the audio received from the one or more first hearing devices 11, the audio received from the one or more second hearing devices 12, the audio received from the one or more third hearing devices 13, and the picked up by the one or more microphones 21, in one example. In various examples, all audio picked up by the one or more microphones of the devices may be unicast to the central device 19, including but not limited to own voice signals from the users of the devices. The central device 19, in this example, may control which microphones are open on some devices, and may use auto mixing to cancel correlated (ambient noise) signals based on signal levels in input, pass through the un-correlated (most likely speech).

.In some examples, the central device may have one or more microphones 21, listen for ambient sounds, and cancel these sounds. The central device 19 may be a standalone device with noise cancelling and/or dedicated processing, in some examples. In some examples, multiple separate radios may be used in a modular approach instead of one radio with central timing. In various examples, the central device 19 may send output to any number of Bluetooth devices via a single broadcast, for example, for use as a conference speaker panel mixer.

The present subject matter is not restricted to unicast or broadcast transmissions. Indeed, the central device and/or the peripheral devices of Figures 1A, 1B, 2A and 2B, for example, may each be capable of either or both unicast and broadcast reception and transmission. Therefore, the present subject matter includes the central device and/or the one or more peripheral devices switching between or operating simultaneously unicast and/or broadcast reception and/or transmission. Additionally or alternatively, the present subject matter is not restricted to mixing or multiplexing the audio streams. The central device of Figures 1A, 1B, 2A and 2B, for example, may be capable of switching between or operating simultaneously to mix and/or multiplex received audio streams.

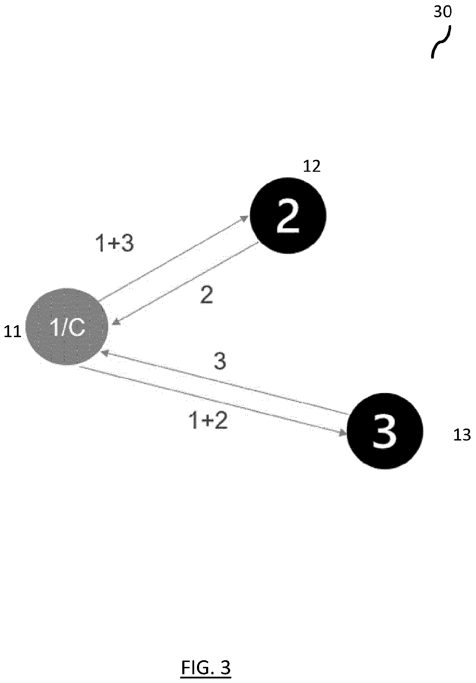

In another example, one of the audio or peripheral devices acts as central bridge device (also referred to herein as a central device), and sets up bi-directional streams with other peripheral devices as shown in FIG. 3. In the example shown, one of the devices (11) receives unicast streams from the other peripheral devices (12, 13) then decodes, mixes the audio combinations, re-encodes and sends the audio to the other peripheral devices while locally rendering audio from the other peripheral devices. In another method, one of the peripheral devices (11) multiplexes either as two separate wireless packets or a combined wireless packet containing the encoded audio from peripheral devices 12 and 13 with encoded audio from device 11, thus advantageously avoiding the extra processing and latency of decoding, mixing, and re-encoding. Using one of the peripheral devices as the central device, e.g., to carry out the functionality of the central device from any of the aforementioned examples (including any functionality described in respect of any of the central devices of any of FIGS. 1A, 1B, 2A and 2B), may limit the link budget and provide less maximum distance between participants, as power and antenna efficiency may be limited compared to those of a separate bridge device, in some examples.

FIG. 3 illustrates a block diagram of a system 30 including a wireless ear-wearable device that functions as a unicast conversation bridge for ear-wearable devices, according to various examples of the present subject matter. The system 30 includes one or more peripheral devices, such as the one or more first hearing devices 11 configured to be worn on or in an ear of a first user, one or more second hearing devices 12 configured to be worn on or in an ear of a second user, and one or more third hearing devices 13 configured to be worn on or in an ear of a third user. In various examples, the one or more first hearing devices 11 is configured as a central device for wireless communication with the one or more second hearing devices 12 and the one or more third hearing devices 13, and includes one or more processors programmed to receive a second wireless signal 2 from the one or more second hearing devices 12 via a second wireless connection, and receive a third wireless signal 3 from the one or more third hearing devices 13 via a third wireless connection, and transmit, to the one or more second hearing devices 12 and the one or more third hearing devices 13, one or more audio packets based on the received second wireless signal 2 and the received third wireless signal 3.

In one example, transmitting to the one or more second hearing devices 12 and the one or more third hearing devices 13 includes sending multiple unicast transmissions. In unicast mode, the one or more first hearing devices 11 act as the central device and are configured to send an audio packet 1+3 to the one or more second hearing devices 12 that includes the audio from the one or more first hearing devices 11 and the audio received from the one or more third hearing devices 13. Likewise, the one or more first hearing devices 11 are configured to send an audio packet 1+2 to the one or more third hearing devices 13 that includes the audio received from the one or more second hearing devices 12 and the audio from the one or more first hearing devices 11.

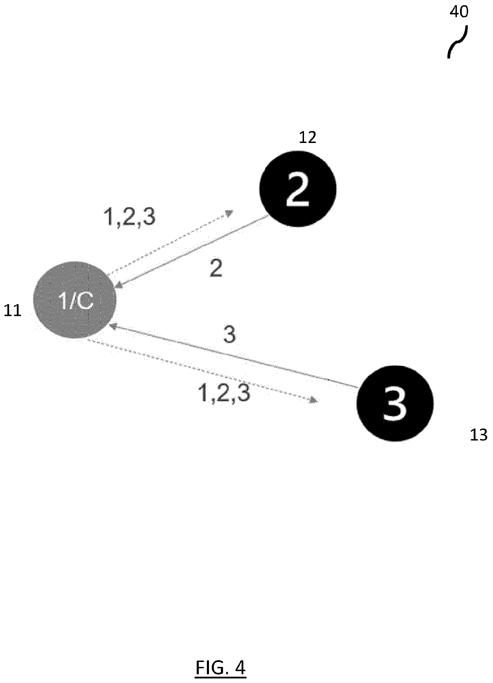

In another example, peripheral device 11 may function as the central device while broadcasting encoded streams as BISes in a BIG, such as shown in FIG. 4, where peripheral devices 12 and 13 may receive channel 1 and 3 and channels 1 and 2 respectively, while peripheral device 11 renders audio to the wearer from devices 12 and 13.

FIG. 4 illustrates a block diagram of a system 40 including a wireless ear-wearable device that functions as a broadcast conversation bridge for ear-wearable devices, according to various examples of the present subject matter. The system 40 includes one or more peripheral devices, such as the one or more first hearing devices 11 that act as a central device for transmitting to the one or more second hearing devices 12 and the one or more third hearing devices 13 using a broadcast transmission. In various examples, the one or more first hearing devices 11 is configured as a central device for wireless communication with the one or more second hearing devices 12 and the one or more third hearing devices 13, and includes one or more processors programmed to receive a second wireless signal 2 from the one or more second hearing devices 12 via a second wireless connection, and receive a third wireless signal 3 from the one or more third hearing devices 13 via a third wireless connection, and transmit, to the one or more second hearing devices 12 and the one or more third hearing devices 13, one or more audio packets based on the received second wireless signal 2 and the received third wireless signal 3.

In this example, transmitting to the one or more second hearing devices 12 and the one or more third hearing devices 13 includes sending a broadcast transmission. In broadcast mode, the one or more first hearing devices 11 act as the central device and are configured to send an audio packet 1+2+3 to the one or more second hearing devices 12 and the one or more third hearing devices 13 that includes the audio from the one or more first hearing devices 11, the audio received from the one or more second audio devices 12, and the audio received from the one or more third hearing devices 13.

Included in the present subject matter, the audio input of one or more microphones (e.g., of other devices) can be received by the one or more first peripheral devices that act as a central device, for example the one or more first hearing devices 11 of FIG. 3 and/or FIG. 4, and processed in a similar manner as described earlier in FIG. 1B and/or FIG. 2B.

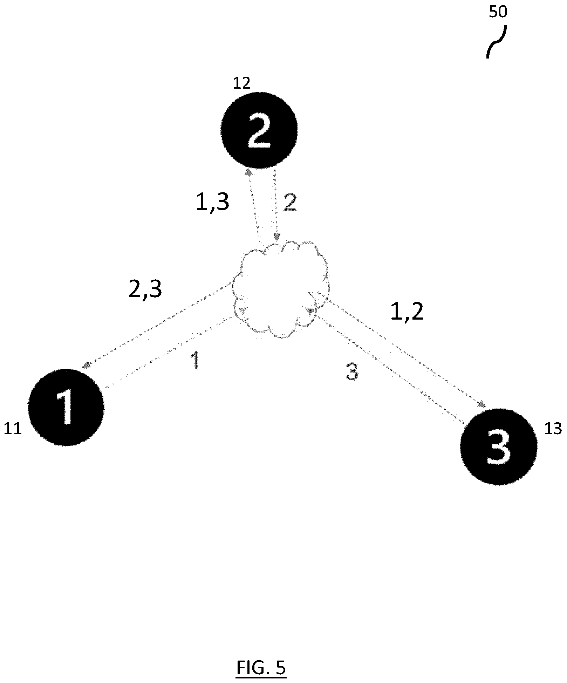

In another example, the system does not rely on a bridge device, i.e. a control device, or one peripheral device acting as bridge, i.e., as a control device. In this topology, depicted in FIG. 5, each of the audio sources sets up a Broadcast Isochronous Group (BIG) with one (mono) or two (stereo) Broadcast Isochronous Streams (BISes), with each one carrying the microphone audio of the transmitting device. Each peripheral device in the network of this topology, in addition to setting up such a broadcast, can receive BISes from the BIGs set up by the other members. As many members can participate as bandwidth allows, in various examples. In one example, each peripheral device broadcasts its own microphone audio and receives the broadcasts from the other network members, i.e., peripheral devices.

In addition, any of the broadcasts depicted in FIGS. 2A, 2B, 4 and 5 may be encrypted using a broadcast code for ensuring member privacy. Broadcast codes may be used to encrypt the broadcasts, and optionally, the codes may be distributed directly between devices if they are paired with each other, in close proximity, or via each user or wearer's smartphones, for example, using a camera and QR (quick response) code, user code entry, and/or near field communication with each other. For example, a smartphone application may be used to allow peripheral devices or participants to opt in to the transmissions, in various examples. In one example, a QR code is displayed on one user's phone that other users can scan with their phone's camera to opt-in securely. In another example, the system uses NFC (near field communications), for example, NFMI (near field magnetic induction), such that participants may tap phones or devices together to opt-in to the communications between the peripheral devices and/or between the peripheral device(s) and a control device.

FIG. 5 illustrates a block diagram of a system 50 for ear-wearable devices where each peripheral device broadcasts its own audio and receives the broadcast of other peripheral devices (e.g., network members), according to various examples of the present subject matter. The system 50 includes one or more peripheral devices, such as one or more first hearing devices 11 configured to be worn on or in an ear of a first user, one or more second hearing devices 12 configured to be worn on or in an ear of a second user, and one or more third hearing devices 13 configured to be worn on or in an ear of a third user. In the depicted example, each peripheral device of the one or more first hearing devices 11, the one or more second hearing devices 12, and the one or more third hearing devices 13 is configured with one or more processors programmed to broadcast an audio packet to other peripheral devices of the one or more first hearing devices 11, the one or more second hearing devices 12, and the one or more third hearing devices 12, including acoustic signals received by a microphone of the each peripheral device, and receive a broadcasted signal from the other peripheral devices including acoustic signals received by microphones of the other peripheral devices.

For example, the one or more first hearing devices 11 broadcasts an audio packet 1 including acoustic signals received by the microphone of the one or more first hearing devices 11, and receives broadcasted signals 2+3 from the other devices. In addition, the one or more second hearing devices 12 broadcasts an audio packet 2 including acoustic signals received by the microphone of the one or more second hearing devices 12, and receives broadcasted signals 1+3 from the other devices. Also, the one or more third hearing devices 13 broadcasts an audio packet 3 including acoustic signals received by the microphone of the one or more third hearing devices 13, and receives a broadcasted signal 1+2 from the other devices.

Additionally or alternatively, each of the one or more first hearing devices 11, the one or more second hearing devices 12, and the one or more third hearing devices 13 is configured to obtain an encryption code to enable reception and decryption of the broadcasted signals. In various examples, the encryption code is configured to be transmitted using a paired connection, a QR code, or using near field communication between at least two of the one or more first hearing devices 11, the one or more second hearing devices 12, and the one or more third hearing devices 13.

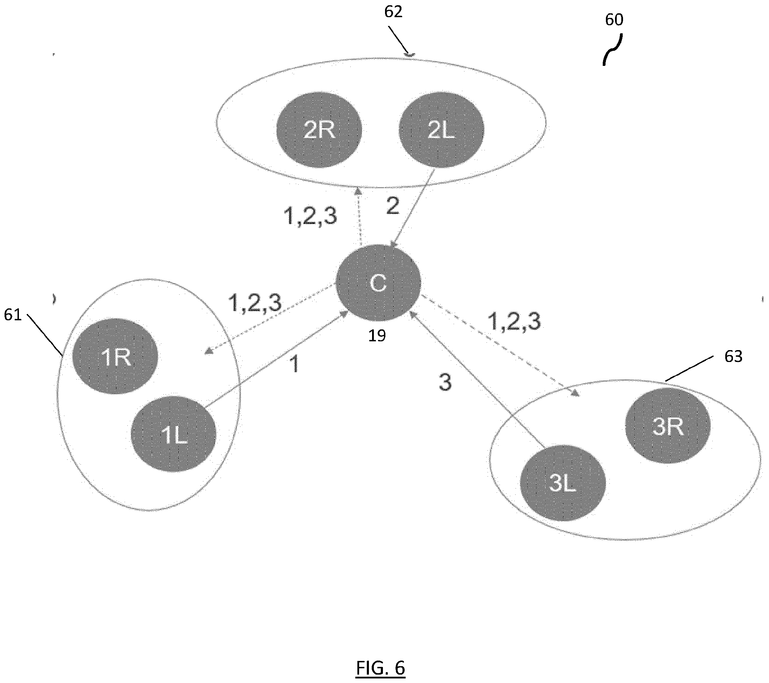

In the previous examples, the depicted embodiments show three devices plus a central device or three devices where any one device may act as a central device. However, the present methodology can be expanded to include any number of participants and devices, or may be reduced to allow only 2-way communication between two devices. In addition, each of the depicted devices (11, 12, 13, 19) may be a single device or it may be part of a coordinated set of devices such as two hearing aids or earbuds. Thus, the only limit on the possible topologies is the occupied bandwidth, in various examples. For illustrative purposes, FIG. 2A has been expanded to include three coordinated sets of devices as shown in FIG. 6. The other drawings may be expanded from single devices to multiple devices per participant in a similar manner, in various examples.

FIG. 6 illustrates a block diagram of a system 60 including a plurality of coordinated sets of wireless ear-wearable devices, and including a broadcast conversation bridge, i.e., central device, for the ear-wearable devices, according to various examples of the present subject matter. The system 60 may also be used with multiple unicast transmissions, in various examples. In one example, the system 60 includes a first set of ear-wearable devices 61 including a left device 1L and a right device 1R. The system 60 also includes a second set of ear-wearable devices 62 including a left device 2L and a right device 2R. The system 60 further includes a third set of ear-wearable devices 63 including a left device 3L and a right device 3R. The system 60 also includes a central device 19 configured to receive a first wireless signal 1 from the first set of ear-wearable devices 61 via a first wireless connection, receive a second wireless signal 2 from the second set of ear-wearable devices 62 via a second wireless connection, receive a third wireless signal 3 from the third set of ear-wearable devices 63 via a third wireless connection. The central device 19 is further configured to transmit, to the first set of ear-wearable devices 61, the second set of ear-wearable devices 62 and the third set of ear-wearable devices 63, one or more audio packets based on the received first wireless signal 1, the received second wireless signal 2 and the received third wireless signal 3.

In one example, the central device 19 is configured to send an audio packet 1+2+3 in broadcast mode to all of the sets of devices (here the first set of ear-wearable devices 61, the second set of ear-wearable devices 62 and the third set of ear-wearable devices 63). The audio packet 1+2+3 includes the audio received from the first set of ear-wearable devices 61, the second set of ear-wearable devices 62 and the third set of ear-wearable devices 63, in one example. As stated above, any of the examples provided herein may be used with single devices or sets of devices. In one example, the pair of devices provides for stereo signals, and optionally the left or right device may control wireless communication for the pair.

In still other examples, the central device 19 (for example, of any of FIGS. 1A, 1B, 2A, 2B and 6) may include wired microphone inputs or may include built-in microphones. Such microphones may be directional or configured in a directional array so that the signal to noise ratio can be improved by directing the microphones or steering the array of microphones at various speakers. The present system may be thus be used by persons wearing headphones or earbuds as well as persons who are not wearing such devices but who can be given a wireless or wired microphone, which can advantageously allow the hearing impaired person or persons to hear the speakers (using the microphone) more easily in the face of noise. In still other examples, the central device 19 (for example, of any of FIGS. 1A, 1B, 2A, 2B and 6) may be a body worn device such as on a neck loop with a Bluetooth radio and such a device may include a telecoil transmitter to convey the audio to a person wearing a hearing aid or hearing aids equipped with a telecoil.

Various examples generally applicable to the present subject matter described elsewhere herein use own voice detection of the peripheral device, e.g., a ear-wearable device, and preferably cancel out other ambient noise (e.g., background noise) using binaural noise reduction before streaming the voice signals via a wireless connection to the other user's peripheral device, e.g. ear-wearable device (and/or the control device). Additionally or alternatively, the present system, as is generally applicable to the present subject matter described elsewhere herein, provides for multiple modes of bidirectional streaming communication, including for example a mode that allows a user to continue to hear ambient sounds as well as incoming streaming of voice communications from the other user or users.

In various examples, generally applicable to the present subject matter described elsewhere herein, at least one of the peripheral devices, e.g. hearing devices, includes a connection to a smartphone application. The smartphone application is configured to be used to pair or unpair the hearing devices, in some examples. In some examples, generally applicable to the present subject matter described elsewhere herein, at least one of the peripheral devices, e.g. hearing devices, includes a voice control configured to be used to pair or unpair the peripheral devices, e.g. hearing devices. In some examples, generally applicable to the present subject matter described elsewhere herein, the one or more first hearing devices and the one or more second hearing devices are configured to share audio information to enhance performance of one or more of speech intelligibility or noise reduction. In various examples, at least one of the hearing devices is a hearing assistance device, such as a hearing aid.

In various examples, the present subject matter, generally applicable to the present subject matter described elsewhere herein, provides for audio devices to be able to discover broadcasts from other audio devices. The present subject matter includes a method of measuring proximity between peripheral devices, conveys sufficient information unique to finding the broadcaster, and may include the broadcaster's broadcast code when applicable, in various examples. In some examples, the broadcast code and other information is consistent with information that may be conveyed using out of band mechanisms such as QR codes or NFC (near field communications), for example, RFID (radio frequency identification) or NFMI (near field magnetic induction), tags for sharing this information among participants.

In one example, the present subject matter, generally applicable to the present subject matter described elsewhere herein, provides a method of measuring proximity between participating devices for obtaining encryption information, for example to facilitate encrypted broadcast communications to be received. In some examples, participating devices may include a proximity sensor (or receiver) that has calibrated its RF (radio frequency) path and written its RF path loss which includes antenna gain to its controller using an HCI_LE_Write_RF_Path_Compensation command. A peripheral device may calibrate its RF path loss including its antenna gain to its controller using the same HCI command, in various examples. In some examples, an advertising or broadcasting device may include its calibrated transmission (TX) power in its advertisement (AUX_ADV_IND). In one example, the total path loss may be calculated using RSSI-TX (received signal strength indicator) power, and path loss may be greater than a threshold that is programmable based on use case. Various examples may use other mechanisms such as channel sounding for determining proximity measurements.

In various examples, the present subject matter, generally applicable to the present subject matter described elsewhere herein, provides for meeting applicable broadcast source requirements. For a public broadcast source to be able to utilize the function of a remote Broadcast Discovery Assistant (BDA), it is bonded with the receiving device, also referred to herein as the peripheral device. In some examples, the source may include a basic audio profile (BAP) broadcast assistant role which allows it to provide information directly to the BDA. Furthermore, the source may use its public address in its broadcast announcements, in various examples. The BDA may be bonded with the broadcast sender, in various examples, and may include a Broadcast Audio Scan service so that the broadcast sender can add a source using the procedures in BAP section 6.5.4 for adding sources ("Adding broadcast sources" of BAP Bluetooth^{®} Profile Specification v1.0.1). The BDA may include a service characteristic for setting the RF path loss threshold, used for estimating proximity, and may scan at a sufficient duty cycle to find acceptors sending general announcements within 1-2 seconds, in an example. The BDA may connect and write one or more characteristics necessary for the broadcast receiver to find and decode the broadcast, in various examples.

In various examples, generally applicable to the present subject matter described elsewhere herein, for a broadcast receiver to make use of the broadcast discovery service, a broadcast receiver sends general connectable advertisements, allows temporary ad hoc connections, and enables a few non-secure writeable characteristics. The format for communications is consistent and includes data such as Broadcast Name, Broadcast ID, and Broadcast Code (if encrypted), in various examples.

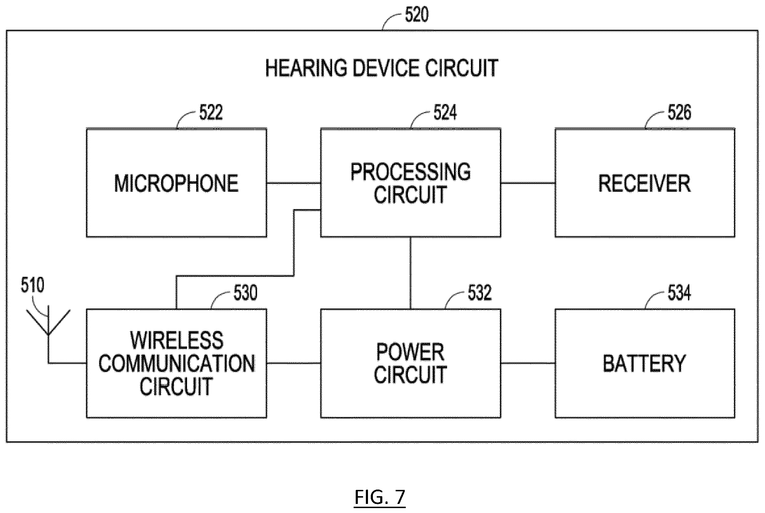

FIG. 7 illustrates a block diagram of a hearing device circuit, according to various examples of the present subject matter. Hearing device circuit 520 represents an example of portions of a hearing device 310 and includes a microphone 522, a wireless communication circuit 530, an antenna 510, a processing circuit 524, a receiver (speaker) 526, a battery 534, and a power circuit 532. Microphone 522 receives sounds from the environment of the hearing device user (wearer of the hearing device). Wireless communication circuit 530 communicates with another device wirelessly using antenna 510, including receiving programming codes, streamed audio signals, and/or other audio signals and transmitting programming codes, audio signals, and/or other signals. Examples of the other device includes other hearing devices of other users, another hearing device of a pair of hearing devices for the same wearer, a hearing device host device, an ALD (Assistive Listening Device), an audio streaming device, a smartphone, and other devices capable of communicating with hearing devices wirelessly. Processing circuit 524 controls the operation of hearing device 310 using the programming codes and processes the sounds received by microphone 522 and/or the audio signals received by wireless communication circuit 530 to produce output sounds. Receiver 526 transmits output sounds to an ear canal of the hearing device wearer. Battery 534 and power circuit 532 constitute the power source for the operation of hearing device circuit 520. In one example, power circuit 532 can include a power management circuit. In another alternative or additional example, battery 534 can include a rechargeable battery, and power circuit 532 can include a recharging circuit for recharging the rechargeable battery.

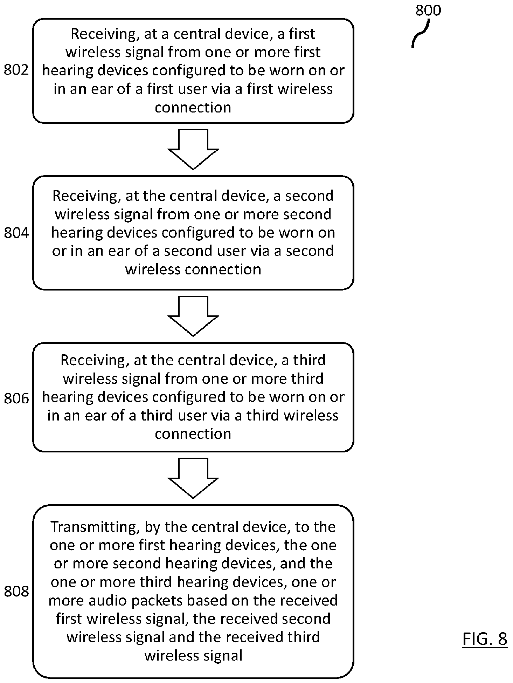

FIG. 8 illustrates a flow diagram of a method for providing a conversation bridge for ear-wearable devices, according to various examples of the present subject matter. The method 800 includes receiving, at a central wireless communication device (e.g., central device), a first wireless signal from one or more first hearing devices configured to be worn on or in an ear of a first user via a first wireless connection, at step 802. At step 804, the method further includes receiving, at the central device, a second wireless signal from one or more second hearing devices configured to be worn on or in an ear of a second user via a second wireless connection. The method also includes receiving, at the central device, a third wireless signal from one or more third hearing devices configured to be worn on or in an ear of a third user via a third wireless connection, at step 806. At step 808, the method includes transmitting, by the central device, to the one or more first hearing devices, the one or more second hearing devices, and the one or more third hearing devices, one or more audio packets based on the received first wireless signal, the received second wireless signal and the received third wireless signal.

Additionally or alternatively, the method includes generating the one or more audio packets by mixing the first wireless signal, the second wireless and the third wireless signal. In an example, generating the one or more audio packets includes generating a first audio packet to be transmitted to the one or more first hearing devices by removing the first wireless signal from the mixed wireless signals to prevent an echo. Additionally or alternatively, the method includes generating the one or more audio packets by multiplexing the first wireless signal, the second wireless signal and the third wireless signal.

Additionally or alternatively, the method also includes the hearing devices suppressing ambient noise in an environment of the user to improve audibility. The method may include the hearing devices reducing volume on an existing incoming audio stream to improve audibility, in some examples. In various examples, the method includes the hearing devices using machine learning to detect the acoustic own voice signals and to suppress non-speech sounds. The method may include the second hearing device detecting a position of the first user to obtain a direction of incoming communication and providing a directional component to the output signal for the second user based on the direction of incoming communication, in an embodiment. Various types of wireless connections may be used, including but not limited to Bluetooth^{®} (such as Bluetooth^{®} 5.2, for example) or Bluetooth^{®} Low Energy (BLE) connections. Additionally or alternatively, the wireless connection provides for use of isochronous channels. For example, Bluetooth^{®} 5.2 permits one device to stream to multiple devices over isochronous channels.

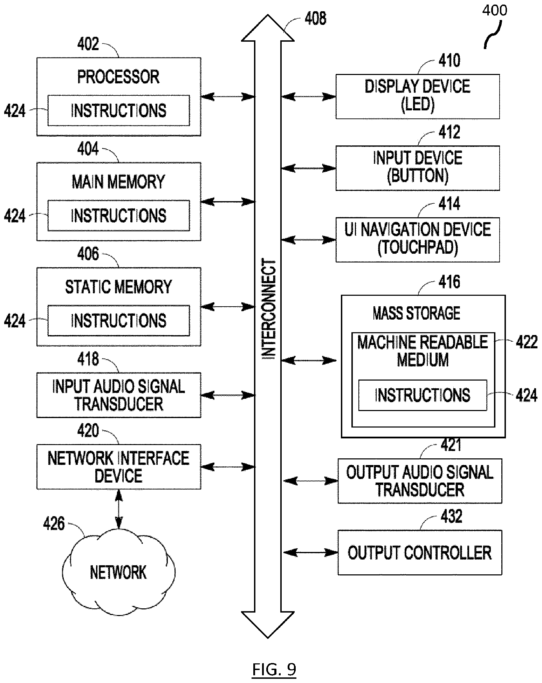

FIG. 9 illustrates a block diagram of an example machine 400 upon which any one or more of the techniques (e.g., methodologies) discussed herein may perform. In alternative examples, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a hearing device, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a storage device (e.g., drive unit) 416, one or more input audio signal transducers 418 (e.g., microphone), a network interface device 420, and one or more output audio signal transducer 421 (e.g., speaker). The machine 400 may include an output controller 432, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 may constitute machine readable media.

While the machine readable medium 422 is illustrated as a single medium, the term "machine readable medium" may include a single medium or multiple media (e.g., a centralized or distributed database, and/or associated caches and servers) configured to store the one or more instructions 424.

The term "machine readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Non-limiting machine-readable medium examples may include solid-state memories, and optical and magnetic media. In an example, a massed machine-readable medium comprises a machine-readable medium with a plurality of particles having invariant (e.g., rest) mass. Accordingly, massed machine-readable media are not transitory propagating signals. Specific examples of massed machine-readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to communicate wirelessly using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400, and includes digital or analog communications signals or other intangible medium to facilitate communication of such software.

Various examples of the present subject matter support wireless communications with a hearing device. In various examples the wireless communications may include standard or nonstandard communications. Some examples of standard wireless communications include link protocols including, but not limited to, Bluetooth^{™}, Bluetooth^{™} Low Energy (BLE), IEEE 802.11 (wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications while others support NFMI. Although the present system is demonstrated as a radio system, it is possible that other forms of wireless communications may be used such as ultrasonic, optical, infrared, and others. It is understood that the standards which may be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, SPI, PCM, ATM, Fibre-channel, Firewire or 1394, InfiniBand, or a native streaming interface. In various examples, such connections include all past and present link protocols. It is also contemplated that future versions of these protocols and new future standards may be employed without departing from the scope of the present subject matter.

Hearing assistance devices typically include at least one enclosure or housing, a microphone, hearing assistance device electronics including processing electronics, and a speaker or "receiver." Hearing assistance devices may include a power source, such as a battery. In various examples, the battery is rechargeable. In various examples multiple energy sources are employed. It is understood that in various examples the microphone is optional. It is understood that in various examples the receiver is optional. It is understood that variations in communications protocols, antenna configurations, and combinations of components may be employed without departing from the scope of the present subject matter. Antenna configurations may vary and may be included within an enclosure for the electronics or be external to an enclosure for the electronics. Thus, the examples set forth herein are intended to be demonstrative and not a limiting or exhaustive depiction of variations.

It is understood that digital hearing assistance devices include a processor. In digital hearing assistance devices with a processor, programmable gains may be employed to adjust the hearing assistance device output to a wearer's particular hearing impairment. The processor may be a digital signal processor (DSP), microprocessor, microcontroller, other digital logic, or combinations thereof. The processing may be done by a single processor, or may be distributed over different devices. The processing of signals referenced in this application may be performed using the processor or over different devices. Processing may be done in the digital domain, the analog domain, or combinations thereof. Processing may be done using subband processing techniques. Processing may be done using frequency domain or time domain approaches. Some processing may involve both frequency and time domain aspects. For brevity, in some examples drawings may omit certain blocks that perform frequency synthesis, frequency analysis, analog-to-digital conversion, digital-to-analog conversion, amplification, buffering, and certain types of filtering and processing. In various examples of the present subject matter the processor is adapted to perform instructions stored in one or more memories, which may or may not be explicitly shown. Various types of memory may be used, including volatile and nonvolatile forms of memory. In various examples, the processor or other processing devices execute instructions to perform a number of signal processing tasks. Such examples may include analog components in communication with the processor to perform signal processing tasks, such as sound reception by a microphone, or playing of sound using a receiver (i.e., in applications where such transducers are used). In various examples of the present subject matter, different realizations of the block diagrams, circuits, and processes set forth herein may be created by one of skill in the art without departing from the scope of the present subject matter.

It is further understood that different hearing devices may embody the present subject matter without departing from the scope of the present disclosure. The devices depicted in the figures are intended to demonstrate the subject matter, but not necessarily in a limited, exhaustive, or exclusive sense. It is also understood that the present subject matter may be used with a device designed for use in the right ear or the left ear or both ears of the wearer.

The present subject matter is demonstrated for hearing devices, including hearing assistance devices, including but not limited to, behind-the-ear (BTE), in-the-ear (ITE), in-the-canal (ITC), receiver-in-canal (RIC), invisible-in-canal (IIC) or completely-in-the-canal (CIC) type hearing assistance devices. It is understood that behind-the-ear type hearing assistance devices may include devices that reside substantially behind the ear or over the ear. Such devices may include hearing assistance devices with receivers associated with the electronics portion of the behind-the-ear device, or hearing assistance devices of the type having receivers in the ear canal of the user, including but not limited to receiver-in-canal (RIC) or receiver-in-the-ear (RITE) designs. The present subject matter may also be used in hearing assistance devices generally, such as cochlear implant type hearing devices. The present subject matter may also be used in deep insertion devices having a transducer, such as a receiver or microphone. The present subject matter may be used in bone conduction hearing devices, in some examples. The present subject matter may be used in devices whether such devices are standard or custom fit and whether they provide an open or an occlusive design. It is understood that other hearing devices not expressly stated herein may be used in conjunction with the present subject matter.

### Other Notes and Examples

Example 1 is a system including one or more first hearing devices configured to be worn on or in an ear of a first user, one or more second hearing devices configured to be worn on or in an ear of a second user, and a central device configured for wireless communication with the one or more first hearing devices and the one or more second hearing devices, wherein the central device includes one or more processors programmed to: receive a first wireless signal from the one or more first hearing devices via a first wireless connection, receive a second wireless signal from the one or more second hearing devices via a second wireless connection, and transmit, to the one or more first hearing devices and the one or more second hearing devices, one or more audio packets based on the received first wireless signal and the received second wireless signal.

In Example 2, the subject matter of Example 1 optionally includes wherein one or more of the first wireless connection or the second wireless connection include a Bluetooth^{®} connection.

In Example 3, the subject matter of Example 1 or Example 2 optionally includes wherein one or more of the first wireless connection or the second wireless connection include a Bluetooth^{®} Low Energy (BLE) connection.

In Example 4, the subject matter of any of Examples 1 to 3 optionally includes wherein transmitting to the one or more first hearing devices and the one or more second hearing devices includes sending a broadcast transmission.

In Example 5, the subject matter of any of Examples 1 to 4 optionally includes wherein transmitting to the one or more first hearing devices and the one or more second hearing devices includes sending multiple unicast transmissions.

In Example 6, the subject matter of any of Examples 1 to 5 optionally includes wherein the one or more processors are further programmed to generate the one or more audio packets by mixing the first wireless signal and the second wireless signal.

In Example 7, the subject matter of Example 6 optionally includes wherein generating the one or more audio packets includes generating a first audio packet to be transmitted to the one or more first hearing devices by removing the first wireless signal from the mixed wireless signals to prevent an echo.

In Example 8, the subject matter of any of Examples 1 to 7 optionally includes wherein the one or more processors are further programmed to generate the one or more audio packets by multiplexing the first wireless signal and the second wireless signal.

In Example 9, the subject matter of any of Examples 1 to 8 optionally includes wherein the central device further includes a wired or wireless microphone.

In Example 10, the subject matter of any of Examples 1 to 9 optionally further includes one or more third hearing devices configured to be worn on or in an ear of a third user, wherein the one or more processors are further programmed to receive a third wireless signal from the one or more third hearing devices via a third wireless connection and transmit, to the one or more first hearing devices, the one or more second hearing devices, and the one or more third hearing devices, one or more audio packets based on the received first wireless signal, the received second wireless signal and the received third wireless signal.

In Example 11, the subject matter of Example 10 optionally further includes one or more fourth hearing devices configured to be worn on or in an ear of a fourth user, wherein the one or more processors are further programmed to receive a fourth wireless signal from the one or more fourth hearing devices via a fourth wireless connection and transmit, to the one or more first hearing devices, the one or more second hearing devices, the one or more third hearing devices, and the one or more fourth hearing devices, one or more audio packets based on the received first wireless signal, the received second wireless signal, the received third wireless signal and the received fourth wireless signal.

Example 12 is a system including one or more first hearing devices configured to be worn on or in an ear of a first user, one or more second hearing devices configured to be worn on or in an ear of a second user, and one or more third hearing devices configured to be worn on or in an ear of a third user, wherein the one or more first hearing devices is configured as a central device for wireless communication with the one or more second hearing devices and the one or more third hearing devices, wherein the central device includes one or more processors programmed to receive a second wireless signal from the one or more second hearing devices via a second wireless connection, receive a third wireless signal from the one or more third hearing devices via a third wireless connection, and transmit, to the one or more second hearing devices and the one or more third hearing devices, one or more audio packets based on the received second wireless signal and the received third wireless signal.

In Example 13, the subject matter of Example 12 optionally includes wherein transmitting to the one or more second hearing devices and the one or more third hearing devices includes sending a broadcast transmission.

In Example 14, the subject matter of Example 12 or Example 13 optionally includes wherein transmitting to the one or more second hearing devices and the one or more third hearing devices includes sending multiple unicast transmissions.

Example 15 is a system including one or more first hearing devices configured to be worn on or in an ear of a first user, and one or more second hearing devices configured to be worn on or in an ear of a second user, wherein each device of the one or more first hearing devices and the one or more second hearing devices is configured with one or more processors programmed to: broadcast an audio packet to other devices of the one or more first hearing devices and the one or more second hearing devices, including acoustic signals received by a microphone of the each device, and receive a broadcasted signal from the other devices including acoustic signals received by microphones of the other devices.

In Example 16, the subject matter of Example 15 optionally includes wherein each of the one or more first hearing devices and the one or more second hearing devices is configured to obtain an encryption code to enable reception and decryption of the broadcasted signal.

In Example 17, the subject matter of Example 16 optionally includes wherein the encryption code is configured to be transmitted using a paired connection, a QR code, or using near field communication between the one or more first hearing devices and the one or more second hearing devices.

In Example 18, the subject matter of any of Examples 15 to 17 optionally further includes one or more third hearing devices configured to be worn on or in an ear of a third user, wherein each device of the one or more first hearing devices, the one or more second hearing devices, and the one or more third hearing devices is configured with one or more processors programmed to: broadcast an audio packet to other devices of the one or more first hearing devices, the one or more second hearing devices, and the one or more third hearing devices, including acoustic signals received by a microphone of the each device, and receive a broadcasted signal from the other devices including acoustic signals received by microphones of the other devices.

Example 19 is a method including receiving, at a central wireless communication device, a first wireless signal from one or more first hearing devices configured to be worn on or in an ear of a first user via a first wireless connection, receiving, at the central device, a second wireless signal from one or more second hearing devices configured to be worn on or in an ear of a second user via a second wireless connection, and transmitting, by the central device, to the one or more first hearing devices and the one or more second hearing devices, one or more audio packets based on the received first wireless signal and the received second wireless signal.

In Example 20, the subject matter of Example 19 optionally further includes generating, by the central device, the one or more audio packets by mixing the first wireless signal and the second wireless.

In Example 21, the subject matter of Example 19 or Example 20 optionally further includes generating, by the central device, the one or more audio packets by multiplexing the first wireless signal and the second wireless signal.

In Example 22, the subject matter of any of Examples 19 to 21 optionally further includes receiving, at the central device, a third wireless signal from one or more third hearing devices configured to be worn on or in an ear of a third user via a third wireless connection, and transmitting, by the central device, to the one or more first hearing devices, the one or more second hearing devices, and the one or more third hearing devices, one or more audio packets based on the received first wireless signal, the received second wireless signal and the received third wireless signal.

In Example 23, the subject matter of Example 22 optionally further includes receiving, at the central device, a fourth wireless signal from one or more fourth hearing devices configured to be worn on or in an ear of a fourth user via a fourth wireless connection, and transmitting, by the central device, to the one or more first hearing devices, the one or more second hearing devices, the one or more third hearing devices, and the one or more fourth hearing devices, one or more audio packets based on the received first wireless signal, the received second wireless signal, the received third wireless signal and the received fourth wireless signal.

Example 24 is at least one machine-readable medium including instructions that, when executed by processing circuitry, cause the processing circuitry to perform operations to implement the method of any of Examples 19-23.

Example 25 is an apparatus comprising means to implement the method of any of Examples 19-23.

Example 26 is a system to implement the method of any of Examples 19-23.

Example 27 is a method implemented by the system of any of Examples 1-18.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

## Claims

1. A system, comprising:
one or more first hearing devices configured to be worn on or in an ear of a first user;
one or more second hearing devices configured to be worn on or in an ear of a second user; and
a central device configured for wireless communication with the one or more first hearing devices and the one or more second hearing devices, wherein the central device includes one or more processors programmed to:
receive a first wireless signal from the one or more first hearing devices via a first wireless connection;
receive a second wireless signal from the one or more second hearing devices via a second wireless connection; and
transmit, to the one or more first hearing devices and the one or more second hearing devices, one or more audio packets based on the received first wireless signal and the received second wireless signal.

2. The system of claim 1, wherein one or more of the first wireless connection or the second wireless connection include a Bluetooth^{®} connection and/or a Bluetooth^{®} Low Energy (BLE) connection.

3. The system of claim 1 or claim 2, wherein transmitting to the one or more first hearing devices and the one or more second hearing devices includes sending a broadcast transmission and/or multiple unicast transmissions.

4. The system of any preceding claim, wherein the one or more processors are further programmed to:
generate the one or more audio packets by mixing the first wireless signal and the second wireless signal.

5. The system of claim 4, wherein generating the one or more audio packets includes generating a first audio packet to be transmitted to the one or more first hearing devices by removing the first wireless signal from the mixed wireless signals to prevent an echo.

6. The system of any preceding claim, wherein the one or more processors are further programmed to:
generate the one or more audio packets by multiplexing the first wireless signal and the second wireless signal.

7. The system of any preceding claim, wherein the central device further includes a wired or wireless microphone.

8. The system of any preceding claim, further comprising:
one or more third hearing devices configured to be worn on or in an ear of a third user,
wherein the one or more processors are further programmed to:
receive a third wireless signal from the one or more third hearing devices via a third wireless connection; and
transmit, to the one or more first hearing devices, the one or more second hearing devices, and the one or more third hearing devices, one or more audio packets based on the received first wireless signal, the received second wireless signal and the received third wireless signal.

9. The system of claim 8, further comprising:
one or more fourth hearing devices configured to be worn on or in an ear of a fourth user,
wherein the one or more processors are further programmed to:
receive a fourth wireless signal from the one or more fourth hearing devices via a fourth wireless connection; and
transmit, to the one or more first hearing devices, the one or more second hearing devices, the one or more third hearing devices, and the one or more fourth hearing devices, one or more audio packets based on the received first wireless signal, the received second wireless signal, the received third wireless signal and the received fourth wireless signal.

10. A system of any preceding,
wherein the one or more processors are further programmed to:
broadcast an audio packet to other devices of the one or more first hearing devices and the one or more second hearing devices, including acoustic signals received by a microphone of the each device; and
receive a broadcasted signal from the other devices including acoustic signals received by microphones of the other devices.

11. The system of claim 10, wherein each of the one or more first hearing devices and the one or more second hearing devices is configured to obtain an encryption code to enable reception and decryption of the broadcasted signal, and optionally, wherein the encryption code is configured to be transmitted using a paired connection, a QR code, or using near field communication between the one or more first hearing devices and the one or more second hearing devices.

12. The system of claim 10 or claim 11, further comprising:
one or more third hearing devices configured to be worn on or in an ear of a third user,
wherein each device of the one or more first hearing devices, the one or more second hearing devices, and the one or more third hearing devices is configured with one or more processors programmed to:
broadcast an audio packet to other devices of the one or more first hearing devices, the one or more second hearing devices, and the one or more third hearing devices, including acoustic signals received by a microphone of the each device; and
receive a broadcasted signal from the other devices including acoustic signals received by microphones of the other devices.

13. A method, comprising:
receiving, at a central wireless communication device, a first wireless signal from one or more first hearing devices configured to be worn on or in an ear of a first user via a first wireless connection;
receiving, at the central device, a second wireless signal from one or more second hearing devices configured to be worn on or in an ear of a second user via a second wireless connection; and
transmitting, by the central device, to the one or more first hearing devices and the one or more second hearing devices, one or more audio packets based on the received first wireless signal and the received second wireless signal.

14. The method of claim 13, further comprising:
generating, by the central device, the one or more audio packets by mixing and/or mulitplexing the first wireless signal and the second wireless.

15. The method of claim 13 or claim 14, further comprising:
receiving, at the central device, a third wireless signal from one or more third hearing devices configured to be worn on or in an ear of a third user via a third wireless connection; and
transmitting, by the central device, to the one or more first hearing devices, the one or more second hearing devices, and the one or more third hearing devices, one or more audio packets based on the received first wireless signal, the received second wireless signal and the received third wireless signal, and optionally, further comprising:
receiving, at the central device, a fourth wireless signal from one or more fourth hearing devices configured to be worn on or in an ear of a fourth user via a fourth wireless connection; and
transmitting, by the central device, to the one or more first hearing devices, the one or more second hearing devices, the one or more third hearing devices, and the one or more fourth hearing devices, one or more audio packets based on the received first wireless signal, the received second wireless signal, the received third wireless signal and the received fourth wireless signal.
